# EUROPÄISCHE PATENTSCHRIFT

(11) **EP 2 377 609 B1**
(45) Veröffentlichungstag und Bekanntmachung des Hinweises auf die Patenterteilung: **01.05.2013**
(21) Anmeldenummer: 11002728.1
(22) Anmeldetag: 31.03.2011
(51) Int. Cl.: B01J 19/12

(54) **Modularer Photo-Röhrenreaktor**
Modular photo tubular reactor
Réacteur photo-tubulaire modulaire

(30) Priorität: 12.04.2010 DE 102010014712
(43) Veröffentlichungstag der Anmeldung: 19.10.2011
(73) Patentinhaber: UV-Consulting Peschl e. K., 55130 Mainz (DE)
(72) Erfinder: Peschl, Alexander, 55130 Mainz (DE); Braun, André Prof. Dr., 31620 Cépet (FR); Peschl, Günther, 55130 Mainz (DE)
(74) Vertreter: Straub, Bernd

(56) Entgegenhaltungen:
- EP-A1- 1 247 576
- WO-A1-95/03261

## Beschreibung

Die nachfolgende Erfindung bezieht sich auf einen modularen Photo-Röhrenreaktor zur photochemischen Behandlung fluider Medien in gasförmiger und/oder kondensierter Phase.

Die Auslegung photochemischer Reaktoren durch Upscaling wird nach wie vor auf Grund der Schwierigkeiten, adäquate Modelle für die Übertragung photonischer Energie in chemische zu entwickeln, semiempirisch ausgeführt. So besteht bislang keine einheitliche Methode, photochemische Reaktoren aus dem Labormaßstab in den Produktionsmaßstab zu übertragen, ohne an dem Aufbau Änderungen vorzunehmen, die über eine reine Vergrößerung hinausgehen. In letzter Zeit wurde bei der Konstruktion photochemischer Reaktoren jeder Größenordnung das Augenmerk hauptsächlich auf die Sicherheitsanforderungen gelegt, die durch die Verwendung von Strahlungsquellen, die bei hoher Temperatur arbeiten, entstehen: Diese können Hotspots in einer Umgebung bilden, die unter Umständen entzündliche Materialien enthält, und stellen damit ein Sicherheitsrisiko dar.

Bei der Entwicklung photochemischer Reaktoren ist beim Upscaling des bestrahlten Reaktorvolumens vor allem die Konstanthaltung des Verhältnisses von bestrahltem Volumen zum Reaktorvolumen und der spezifischen Lichtausstrahlung beziehungsweise der auftreffenden Photonenflussdichte wichtig. Letzteres wird meistens dadurch gelöst, dass für das größere Reaktorvolumen eine Strahlungsquelle des gleichen Typs wie für das kleinere Reaktorvolumen verwendet wird; so wird die auftreffende Photonenflußdichte nicht verändert, während die verschiedenen Abmessungen der Strahlungsquellen zu Nachteilen hinsichtlich des zu bestrahlenden Materials, etwa bei der Fluidführung, führen können. Nach Auswahl der Strahlungsquelle wird der photochemische Reaktor hinsichtlich der Bestrahlungs-, Strömungs- und Gassättigungsbedingungen innerhalb der gegebenen Grenzen der Prozessoptimierung (beispielsweise durch Optimal Experimental Design) angepasst.

Ausgehend von diesem Stand der Technik liegt die Aufgabe der vorliegenden Erfindung darin, ein Upscaling eines photochemischen Reaktors bei optimierter Reaktionsführung auf Produktionsmaßstab zu ermöglichen, und damit einen Photoreaktor kostengünstig und unter geringem Zeitaufwand bereitzustellen.

Diese Aufgabe wird durch einen modularen Photo-Röhrenreaktor mit den Merkmalen des Anspruchs 1 gelöst. Weiterbildungen sind in den Unteransprüchen ausgeführt.

Eine erste Ausführungsform des Reaktors bezieht sich somit auf einen modularen Röhrenreaktor, mit dem fluide Medien photochemisch behandelt werden können. Ein solcher photochemischer Röhrenreaktor besteht aus einer zentralaxial angeordneten Bestrahlungseinheit, die wenigstens eine Strahlungsquelle enthält und die von einer Reaktorwand koaxial umgeben ist, so dass zwischen der Reaktorwand und der Bestrahlungseinheit ein Ringspalt gebildet wird, in dem das Bestrahlungsvolumen vorliegt.

Der Ringspalt beziehungsweise die Reaktorwand ist beidseitig durch ein Endstück respektive ein Kopfstück und ein Fußstück begrenzt, davon ausgehend, dass der Reaktor zumeist in der vertikalen stehend betrieben wird - was nicht zwingend erforderlich ist. Das Kopfstück des Röhrenreaktors weist einen Fluideinlass und das Fußstück einen Fluidauslass auf.

Um ein quasi lineares Upscaling von Parametern wie Massenfluss, elektrischer Eingangsleistung und Strömung zu ermöglichen, ist der Röhrenreaktor modular aufgebaut. Dazu wird die Reaktorwand durch zwei oder mehr zylindrische Reaktorsegmente bereitgestellt, wobei jeweils zwischen zwei benachbarten Reaktorsegmenten ein ringscheibenförmiger Verbindungs-Zwischenflansch angeordnet ist. Der Innendurchmesser der Ringscheibe entspricht dem Innendurchmesser der Reaktorsegmente, so dass der Ringspalt über die gesamte Länge des Reaktors die gleiche Dicke aufweist.

Um nun eine hochturbulente Strömung und eine Gassättigung beziehungsweise Gasübersättigung entlang der gesamten Länge des Röhrenreaktors zu ermöglichen, ist wenigstens ein Gaskanal beziehungsweise sind vorzugsweise mehrere Gaskanäle in der Scheibenebene des Zwischenflansches vorgesehen, die in den Ringspalt münden. Die tangential in dem Zwischenflansch verlaufenden Einlasskanäle sind zwar als Gaskanäle bezeichnet, es ist aber durchaus denkbar, dass über diese Gaskanäle auch fluide Reagenzien in Form von Lösungen oder Suspensionen in den Ringspalt einzubringen.

Auf diese Weise kann in einfacher Weise bei gleich bleibender Ringspaltstärke ein in Längsrichtung ausgedehnter photochemischer Röhrenreaktor geschaffen werden, indem die Anzahl der Reaktormodule in Abhängigkeit der benötigten Bestrahlungseinheit, beziehungsweise deren Länge, deren elektrischer Leistung und der Verweilzeit der Substanz im bestrahlten Volumen variiert wird.

Mit dem erfindungsgemäßen Röhrenreaktor kann so das Upscaling kosten- und zeitoptimiert durchgeführt werden, während gleichzeitig ein Fehlschlagrisiko bei der Auslegung eines Reaktors im Produktionsmaßstab, der auf der Multiplikation eines verbesserten Designs eines entsprechenden Labormaßstabmoduls basiert, verringert wird.

Die in der Scheibenebene des Zwischenflansches bereitgestellten Gaskanäle erstrecken sich vom Außenumfang des Zwischenflansches in Richtung eines Innenumfangs und münden vorteilhaft tangential in diesen, um eine ideale Durchströmung des Fluids sicher zu stellen.

Der Fluidein- und -auslass werden jeweils durch einen ebenfalls tangential in den Ringspalt mündenden Fluidkanal gebildet, wobei die tangentiale Anordnung die gewünschte turbulente Strömung im Ringspalt unterstützt.

Die Bestrahlungseinheit kann in einer Ausführungsform lediglich aus einer Strahlungsquelle bestehen, deren Mantel bzw. deren Schutzrohr aus einem für die photochemische Behandlung geeigneten, für die zu emittierende Strahlung transparenten Material besteht. Die Bestrahlungseinheit kann zusätzlich eines oder mehrere Hüllrohre umfassen, die die Strahlungsquelle beziehungsweise das Schutzrohr der Strahlungsquelle umgeben, wobei die Hüllrohre ebenfalls für die gewünschte Strahlung transparent sind. Sowohl das Schutzrohr der Strahlungsquelle als auch die zusätzlichen Hüllrohre können aus synthetischem Quarz, natürlichem Quarz oder Borsilikatglas bestehen, für ein Filterhüllrohr können auch andere Glasmaterialien verwendet werden, die nur für einen gewünschten Wellenlängenbereich transparent sind.

Die Wahl der Strahlungsquelle hängt von dem/den Chromophoren in dem fluiden Medium ab, die Strahlung absorbieren und dadurch eine gewünschte Reaktion auslösen, die die photochemische Behandlung darstellt. Geeignete Strahlungsquellen zur Durchführung photochemischer Behandlungen können beispielsweise Quecksilberniederdrucklampen, Quecksilbermittel-oder -hochdrucklampen, Natriumniederdrucklampen, Natriummittel- oder - hochdrucklampen, Xenon-Lampen, dielektrisch gehinderte Entladungsstrahlungsquellen (Excimer-Lampen) sowie LED-Arrays sein.

In einer weiteren Ausführungsform der Erfindung weisen sowohl die Zwischenflansche als auch das Kopf- und Fußstück Bohrungen auf, die parallel zu der Zentralachse der Bestrahlungseinheit außerhalb der Reaktorwand verlaufen. Dabei fluchten jeweils Bohrungen des Kopf- beziehungsweise Fußstücks mit jeweils einem Zwischenflansch sowie Bohrungen zweier benachbarter Zwischenflansche, und bilden somit Befestigungspaare für die Reaktormodule beziehungsweise -segmente, indem die Bohrungen in einer Montageanordnung des Photoreaktors kongruent zueinander zu liegen kommen und eine Verbindung der Reaktorsegmente durch Haltestangen ermöglichen.

Es kann aber auch vorgesehen sein, dass das Kopfstück und/oder Fußstück (zumindest) zweiteilig ist und sich zumindest in ein Tangentialanschlussstück und einen Haltering untergliedert, wobei in dem Tangentialanschlussstück die tangential vorliegenden Einlass- beziehungsweise Auslasskanäle für das fluide Medium vorliegen, während der Haltering die Bohrungen aufweist, die zur Befestigung der Reaktormodule mittels der Haltestangen dienen. Der Haltering wird dabei zwischen dem Tangentialanschlussstück des Kopf- oder Fußstücks und dem Reaktorsegment angeordnet.

In einer weiteren Ausführungsform kann in dem Ringspalt entlang seiner Länge eine Leitspirale angeordnet sein, die insbesondere bei geringen Volumenströmungen vorteilhaft die Turbulenz für eine optimierte photochemische Umsetzung erhöht.

Der erfindungsgemäße Photo-Röhrenreaktor kann, mittels einer geeigneten Halterung bzw. eines Stativs horizontal oder vertikal angeordnet werden.

Ferner können zur Durchführung und/oder zur Erhöhung der Effizienz des Prozesses Reaktiv- und/oder Inertgase, aber auch Reagenzien und/oder Reagenzienlösungen durch die tangential angelegten Gaskanäle des/der Zwischenflansche(s) und/oder durch zumindest einen zusätzlichen in dem Kopfstück tangential in den Ringspalt mündend angelegten Einlass des Reaktors sowie mittels des in dem Ringspalt angeordneten Gaseinleitungsrohrs eingebracht werden. Dazu werden die betreffenden Kanäle mit entsprechenden Düsen, bei denen es sich um feinste Düsen handelt, ausgestattet.

In einer weiteren Ausführungsform kann vorgesehen sein, Röhren und/oder Schläuche durch diese Gaskanäle des Zwischenflansches und/oder durch den zumindest einen zusätzlichen, sich tangential in den Ringspalt erstreckenden Einlass an dem Kopfstück zu führen, so dass sie zur Einbringung von Reaktiv- und/oder Inertgas und/oder Reagenzien sich in den Ringspalt erstrecken. In diesem Fall sind die Röhren und/oder Schläuche mit den feinen Düsen ausgestattet.

Alternativ oder zusätzlich zu diesen Einleitungsmaßnahmen kann dem Fluideinlass, durch den das zu bestrahlende Fluid in den Reaktor geführt wird, eine Einrichtung zur Einleitung von Reaktiv- und/oder Inertgas bzw. von Reagenzien oder Reagenzienlösungen zugeordnet sein. Dabei kann die Einleitungseinrichtung direkt an dem Einlassstutzen oder vor dem Einlassstutzen in einer Zuleitung angeordnet sein. Auch diese Einleitungseinrichtung kann mit Düsen ausgestattet sein, wobei es optimierte Düsendurchmesser ermöglichen, bei mittlerer bis hoher Turbulenz im Einlaßstutzen kleinstmögliche Gasblasendurchmesser bzw. eine optimale Gassättigung bzw. Reagenzienverteilung zu erreichen.

Diese und weitere Vorteile werden durch die nachfolgende Beschreibung unter Bezug auf die begleitenden Figuren dargelegt.

Der Bezug auf die Figuren in der Beschreibung dient der Unterstützung der Beschreibung. Gegenstände oder Teile von Gegenständen, die im Wesentlichen gleich oder ähnlich sind, können mit denselben Bezugszeichen versehen sein. Die Figuren sind lediglich schematische Darstellungen von Ausführungsbeispielen der Erfindung. Es zeigt:

**Fig. 1** eine perspektivische Ansicht eines horizontal angeordneten modularen Photo-Röhrenreaktors mit drei Modulen,

**Fig. 2** eine perspektivische Ansicht eines vertikal angeordneten einmoduligen Photoreaktors,

**Fig. 3** eine Seitenquerschnittsansicht des modularen Photo-Röhrenreaktors aus Fig. 1,

**Fig. 4a** eine Querschnittsdraufsicht auf einen Zwischenflansch,

**Fig. 4b** eine Seitenquerschnittsansicht des Zwischenflansches,

**Fig. 5** eine Seitenquerschnittsansicht eines Gaseinleitungsrohrs eines modularen Photo-Röhrenreaktors.

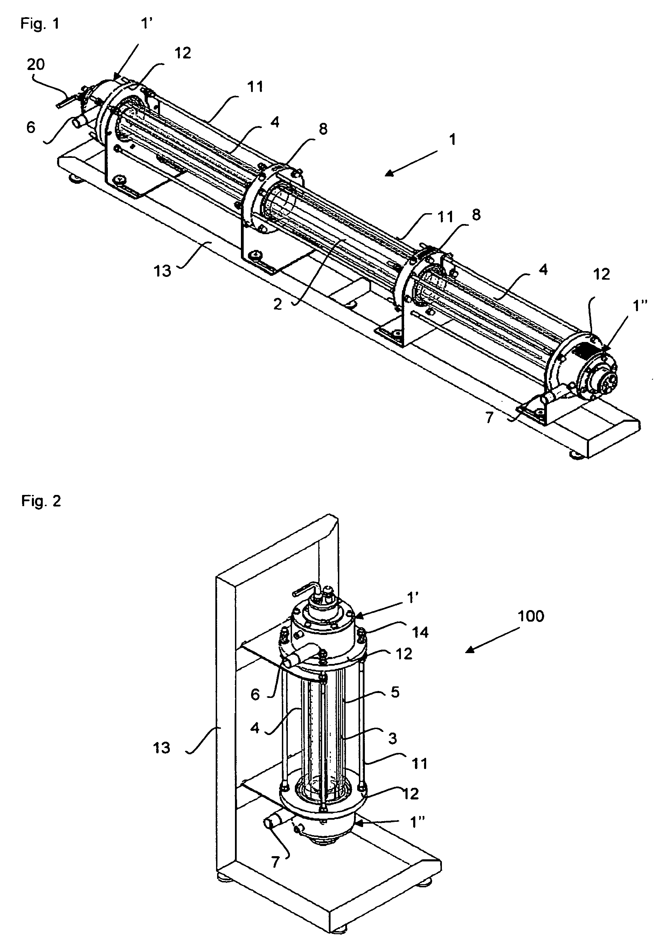

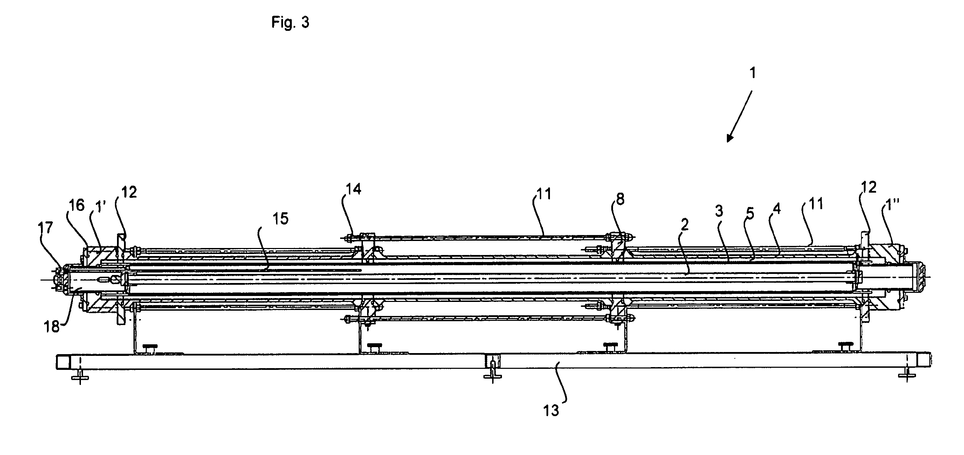

Grundsätzlich bezieht sich der erfindungsgemäße Photo-Röhrenreaktor, wie in **Fig. 1** **und** **3** zu sehen, darauf, dass der Aufbau bei einem Upscaling entsprechend einem gewünschten Durchsatz des fluiden Mediums unter Beibehaltung der Dicke des Ringspalts 5 durch Variation der Anzahl der verwendeten Reaktorwandsegmente 4 durchgeführt wird.

Der in **Fig. 2** gezeigte einmodulige Reaktor 100 bildet somit quasi eine Grundeinheit des erfindungsgemäßen modularen Photo-Röhrenreaktors (beispielsweise eine Laboreinheit), der aus lediglich einem Reaktorwandsegment 4 zwischen Kopf- und Fußstück 1',1" besteht und eine kürzeste Bestrahlungseinheit 3 verwendet. Hier ist die durch den Tangentialeinlass 6 und Tangentialauslass 7 im Ringspalt 5 zwischen Hüllrohr 3 und Reaktorwand 4 erzeugte turbulente Strömung über die gesamte Reaktorlänge in dem mittels der Halterung 13 vertikal angeordneten Reaktor 100 ausreichend, um eine gute Durchmischung und damit ein homogenes Konzentrationsprofil sowie eine ausreichende Gassättigung zu erhalten.

Die in **Fig. 1 bis 3** gezeigte zentralaxiale Bestrahlungseinheit umfasst neben einer Strahlungsquelle 2, die von einem Hüllrohr 3 umgeben ist, beidseitig Anschlussstücke 18 (siehe **Fig. 3**), die das Hüllrohr 3 und die Strahlungsquelle 2 halten. Die Anschlussstücke 18 weisen Durchlassvorrichtungen 17 auf, um einen Durchtritt etwa eines Anschlusskabels 20 (zu sehen in **Fig. 1**) von außen in das Innere des Anschlussstücks 18 bereitzustellen. Das Anschlusskabel 20 verbindet die Strahlungsquelle 2 mit einer Energiequelle. Auch ein Gaseinleitungsrohr 15, um den Zwischenraum zwischen Hüllrohr 3 und Strahlungsquelle 2 mit einem Inertgas zu spülen, kann durch die Durchlassvorrichtungen 17 geführt werden. Durch das Gaseinleitungsrohr 15 kann etwa Stickstoff oder Argon eingeleitet werden. Dies kann erforderlich sein, falls die von der Strahlungsquelle erzeugte Strahlung energiereiche UV-Strahlung, etwa UV-C oder VUV, ist, die andernfalls von Luftstauerstoff absorbiert würde (der folglich zu verdrängen ist) und die so Bildung von Ozon hervorrufen würde.

Die Strahlungsquelle 2 kann von einem oder mehreren Hüllrohren umgeben sein (in den Figuren ist lediglich ein Hüllrohr 3 gezeigt), deren Anordnung die Bildung weiterer zusätzlicher Ringspalte ermöglicht, in denen Kühl-und Filterflüssigkeiten zirkulieren gelassen werden können oder die zur Aufnahme einer Elektrode wie etwa bei der Verwendung einer dielektrisch gehinderte Entladungsstrahlungsquelle (Excimer-Lampe) dienen können. Auch erfordert die Verwendung von Mittel- und Hochdrucklampen beispielsweise eine Lampenkühlung, so dass ein durch ein zusätzliches Hüllrohr gebildeter Ringspalt für die Zirkulation einer Kühlflüssigkeit verwendet wird. Soll bei Verwendung mehrerer Hüllrohre VUV-Strahlung genutzt werden, so sind alle Ringspalte mit Stickstoff oder Argon zu spülen. Sollen hingegen bestimmte Wellenlängenbereiche der emittierten Strahlung herausgefiltert werden, so kann ein Filterhüllrohr angeordnet werden, das entweder selbst aus einem Material ist, das die gewünschten Wellenlängenbereiche absorbiert oder das die Zirkulation eines entsprechenden Filtermediums in dem gebildeten Ringspalt ermöglicht.

Entsprechend einer vorgesehenen Applikation von Kühl- und/oder Filtermedien bzw. einer Elektrodenverlegung sind in den Anschlußstücken entsprechende Halterungen und Öffnungen vorgesehen.

Der modulare Photo-Röhrenreaktor 1 aus **Fig. 1** **und** **3** entspricht in seiner Auslegung und Gestaltung der Grundeinheit aus **Fig. 2**, die zum Upscaling lediglich in ihrer Länge durch Einfügen zweier Reaktorsegmente 4 und der zugehörigen Zwischenflansche 8 vergrößert wird, während der Radius des Ringspaltes 5 konstant bleibt. Die entsprechend der erforderlichen Bestrahlungsleistung zur Durchführung der photochemischen Behandlung in einem vorgegebenen Volumen-/Massenstrom des fluiden Mediums ausgewählte Strahlungsquelle 2 ist vom gleichen Typ wie die des einmoduligen Reaktors 100 und unterscheidet sich lediglich in Länge und Leistung. Durch Beibehaltung der Ringspaltstärke bleiben die gewählten Bestrahlungsbedingungen konstant, dem Verlust von Turbulenz über die größere Länge des Photoreaktors 1 mit den drei Reaktorsegmenten 4 wird durch die tangentiale Gaszufuhr in den Zwischenflanschen 8 begegnet, die neben der Aufrechterhaltung der turbulenten Strömung auch für eine ausreichende Gassättigung im fluiden Medium sorgen.

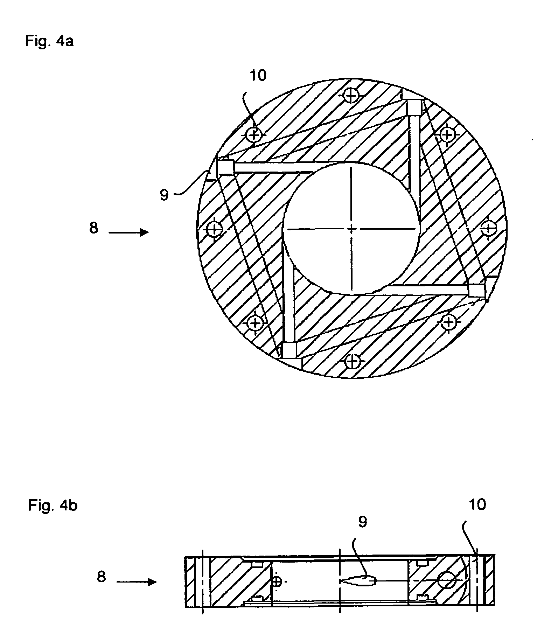

Der Zwischenflansch 8 ist im Detail in **Fig. 4a und 4b** dargestellt. Dort sind die tangential in den Innenumfang mündenden Gaskanäle 9 zu sehen. Ferner sind dort umfänglich regelmäßig verteilten acht Bohrungen 10 zu sehen, die parallel zu der Achse der Bestrahlungseinheit verlaufen, wobei jeweils vier kreuzweise angeordnete Bohrungen 10 zur Verbindung mittels der Haltestangen 11 (siehe **Fig. 1 bis 3**) mit benachbarten Zwischenstücken 8, respektive Halteringen 12 von Kopf- beziehungsweise Fußstück 1', 1" vorgesehen sind.

Zur Verwendung verschiedener Strahlungsquellen für den erfindungsgemäßen modularen Photo-Röhrenreaktor können die Materialien der Bestrahlungseinheit entsprechend ihrer Transparenz in dem für die photochemische Reaktion/Behandlung erforderlichen Wellenlängenbereich und gegebenenfalls auch in Abhängigkeit potentiell auftretender erhöhter Reaktionstemperaturen ausgewählt sein. Solange das Bestrahlungssystem und die Konzentration/Konzentrationen der Chromophoren nicht verändert wird/werden, bleiben die Eindringtiefen der Strahlung konstant und das bestrahlte Volumen wird nur durch die Länge des Reaktors variiert. Die Durchmesser verschiedener Hüllrohre (Schutz- beziehungsweise Mantelrohr der Strahlungsquelle, Kühlrohre, Isolierung- und/oder Glasfilterrohre) können in Abhängigkeit der technischen Anforderungen an die Strahlungsquelle und in Abhängigkeit des photochemischen Systems gewählt werden. Die Länge der zentralaxialen Bestrahlungseinheit ergibt sich aus der erforderlichen Länge des zu konstruierenden Reaktors und wird durch die zu kombinierende Anzahl an Modulen gegeben.

Das Kopfstück 1' und Fußstück 1" der erfindungsgemäßen Reaktoren dienen neben der Bereitstellung der tangentialen Fluidein- und auslässe 6,7 der Halterung der Bestrahlungseinheit, beziehungsweise der Halterung der Anschlussstücke 18 der Bestrahlungseinheit. Dazu sind hier in der mehrteiligen Gestaltung - auch eine einteilige ist möglich - der Kopf- und Fußstücke 1',1" die Halteringe 12 vorgesehen, die auch der Stabilisierung der Bestrahlungseinheit in der zentralaxialen Position unabhängig von der Positionierung des gesamten Reaktors dienen.

Eine Anordnung des Reaktors im Raum kann mittels geeigneter Halterungen 13 horizontal sein, wie in **Fig. 1** **und** **3** gezeigt, oder vertikal, wie in **Fig. 2** dargestellt.

Die Fixierung von Kopf- und Fußstück 1',1" kann durch distal angeordnete Halteringe 16 unterstützt werden.

Das Kopf- und Fußstück 1',1" sind hinsichtlich der Strömungsrichtung austauschbar, sie erlauben eine Strömung durch den tangentialen Einlass 6 und/oder Auslass 7 in dem Reaktionssystem in beide Richtungen. Zudem können das Kopf- und Fußstück 1',1" zusätzliche Einlässe und/oder Auslässe für Reaktiv- oder Inertgas in den Ringspalt 5 aufweisen, wobei diese Ein- bzw. Auslässe sich ebenfalls tangential in den Ringspalt 5 erstrecken können.

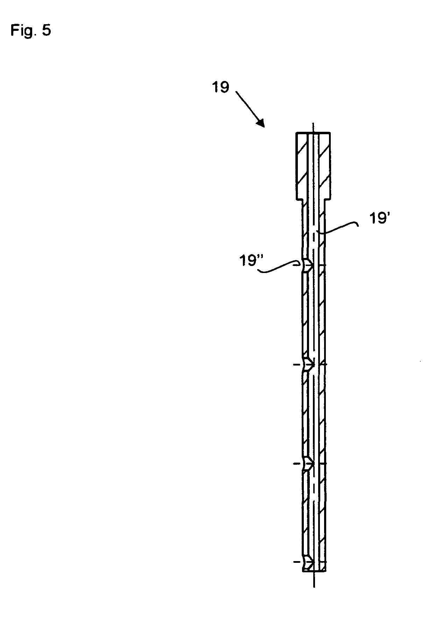

Alternativ kann ein Gaseinleitungsrohr 19 vorgesehen sein, das im Detail in **Fig. 5** dargestellt ist. Das Gaseinleitungsrohr 19 erstreckt sich durch das Kopf- oder Fußstück 1',1" in den Ringspalt, so dass ein gewünschtes Inert-oder Reaktionsgas durch den im Gaseinleitungsrohr 19 vorliegenden Kanal 19' mittels der über die Länge des Rohrs 19 verteilten Öffnungen 19" in das durch den Ringspalt strömende Medium eingeleitet werden kann. Die Öffnungen 19" ermöglichen dabei eine in Längsrichtung des Reaktors ausgedehnte Einleitung des Gases, wodurch die gewünschte (Über-)Sättigung gleichmäßiger über die Länge des Gaseinleitungsrohrs 19 erzielt werden kann.

Sämtliche genannte Gas- und/oder Reagenzieneinleitungen des erfindungsgemäßen Photo-Röhrenreaktors, seien es die tangential in den Innenumfang mündenden Kanäle 9 des Zwischenflansches 8, die zusätzlichen Einlässe in den Ringspalt 5 am Kopfstück 1' bzw. die durch diese Kanäle geführten Rohre oder Schläuche, aber auch das Gaseinleitungsrohr 19, können mit feinsten Düsen versehen sein, um mit dem einzuleitenden Gas Gasblasen von geringstmöglichem Durchmesser und optimale Gassättigung und mit den einzuleitenden Reagenzien oder Reagenzienlösungen bestmögliche Verteilung zu erreichen.

Eine weitere alternative oder zusätzliche Gaseinleitung in das zu bestrahlende Fluid kann am tangentialen Fluideinlass 6 erfolgen. Dazu kann am oder vor dem Einlaßstutzen 6 eine Einrichtung angebracht werden, mit der ein Reaktivgas, beispielsweise zur Sättigung mit Luft oder Sauerstoff im Falle der Abwasserbehandlung, oder ein Inertgas, beispielsweise Stickstoff im Falle einer Triplett-sensibilisierten Reaktion, oder ein Reagenz oder eine Reagenzienlösung, beispielsweise wässriges Wasserstoffperoxid im Falle der Abwasserbehandlung, in das zu bestrahlende Fluid eingeleitet werden kann. Mittels dieser Einrichtungen kann das eingeleitete Gas in einer zu bestrahlenden Flüssigkeit in Gasblasen von kleinstmöglichem Durchmesser verteilt eingeleitet und eine effiziente Gassättigung erreicht werden. Ein eingeleitetes Reagenz kann mittels dieser Einrichtungen in dem zu bestrahlenden Fluid optimal verteilt werden. Die Effizienz dieser Maßnahmen erhöht sich mit zunehmender Turbulenz des Fluids am Einleitungsort.

In der einmoduligen Version von **Fig. 2** sind die Kopf- und Fußstücke 1',1" direkt über die Halteringe 12 mittels der Haltestangen 11 verbunden, in der Version mit drei Modulen (**Fig. 1****,****3**) verbinden jeweils vier Haltestangen 11 einen Haltering 12 mit einem Zwischenflansch 8, sowie die beiden Zwischenflansche 8 miteinander. Die vier Haltestangen 11 sind dabei jeweils kreuzweise versetzt. Zur Befestigung der Reaktorwandsegmente 4 untereinander und mit Kopf- und Fußstück 1',1" und damit zur Festlegung in Bezug auf die Bestrahlungseinheit weisen die Haltestangen 11 endständig Gewinde auf, und können so in der Montageanordnung mit Muttern 14 festgezogen werden. Natürlich können statt der Gewinde auch andere, dem Fachmann geeignet erscheinende Eingriffsmittel vorgesehen werden.

Das Kopf- und Fußstück 1',1" beziehungsweise die Tangentialanschlussstücke sowie die Zwischenflansche 8 sind aus einem Material, das gegenüber dem eingeleiteten Fluid chemisch resistent, mechanisch stabil sowie ausreichend photochemisch stabil ist, gefertigt. Dabei kann es sich beispielsweise um Polyoxymethylen (POM) handeln.

Auch das Material der Reaktorwandsegmente 4 wird in Abhängigkeit seiner Resistenz gegenüber dem entsprechenden chemischen System gewählt, es kann beispielsweise Duranglas zum Einsatz kommen.

Über den Durchmesser der Reaktorsegmente, der den wichtigsten Faktor zu Bestimmung des Reaktorvolumens darstellt, können Strömungsbedingungen und die Verweilzeit beeinflusst werden; seine Bestimmung ist dem Fachmann bekannt.

Da sich die Strömungsbedingungen innerhalb des Röhrenreaktors über die Länge des Reaktors verändern, würde eine Verlängerung des Röhrenreaktors allein zu einem Turbulenzverlust sowie bei der Verwendung von Reaktivgasen zu einem Konzentrations- bzw. Aktivitätsverlust an gelösten gasförmigen Reagenzien führen. Dies wird durch die erfindungsgemäße tangentiale Gaszufuhr durch die Gaskanäle in den Zwischenflanschen zwischen den Reaktormodulen verhindert. Dadurch können die Turbulenz und Gassättigung beziehungsweise Gasübersättigung des Reaktionssystems nach jedem Modul angepasst und so für einen nahezu beliebig langen Photo-Röhrenreaktor aufrechterhalten werden.

Um ein turbulentes Strömungsbild auch bei relativ langsamen Strömungsbedingungen (für längere Verweilzeiten) zu schaffen oder bei einer gegebenen Strömung des Reaktionssystems und Länge des Reaktors zu verbessern, kann eine Leitspirale über die gesamte Länge oder lediglich einen Teil der Länge von einem oder mehreren Modulen im Ringspalt angeordnet werden. Eine solche Leitspirale kann aus einem geeigneten, mechanisch stabilen und in Bezug auf das gegebene chemische Reaktionssystem inerten Material gefertigt sein, beispielsweise aus einem Polytetrafluorethylen-Kunststoff.

Die Leitspirale kann z. B. durch Stangen oder Röhren im Ringspalt gehalten und stabilisiert werden, die sich über die Länge des Reaktors bzw. Ringspaltes oder zumindest über die Länge der Leitspirale erstrecken. Zum Zweck der Halterung der Leitspirale kann etwa das in **Fig. 5** dargestellte Gaseinleitungsrohr 19 verwendet werden, das zur Gassättigung eingesetzt wird, indem es mit einem Gaseinlass am Kopfstück 1' und/oder am Fußstück 1" verbunden ist.

Die elektrischen Kontakte der Strahlungsquelle zum Anschluss an einen Energieversorger können einseitig entweder am Kopfstück 1' oder am Fußstück 1" vorgesehen sein, es kann aber auch je nach Art der verwendeten Strahlungsquelle eine beidseitige Anordnung der elektrischen Kontakte zum Anschluss an den Energieversorger jeweils am Kopfstück 1' und am Fußstück 1" sinnvoll sein.

Die verwendeten Hüllrohre können an beiden Enden offen oder einseitig geschlossen sein, der Aufbau von Kopf- und/oder Fußstück, bzw. der Anschlussstücke kann entsprechend angepasst sein.

Die Reaktorwandsegmente 4 können, wie in **Fig. 3** zu sehen, an beiden Seiten eine flanschartige Verdickung aufweisen, die eine Anordnung der Reaktorwandsegmente 4 an den Halteringen 12 und den Zwischenflanschen 8 verbessert. Ferner können an jedem Modul verschließbare tangentiale Einlass- und/oder Auslassöffnungen vorgesehen sein.

Der erfindungsgemäß modular aufgebaute Photo-Röhrenreaktor kann mit unterschiedlichen UV-Lampen, umfassend Excimer-, Mitteldruck-, Niederdruck-, Niederdruck-Amalgam-Hochleistungslampen, betrieben werden, und ermöglicht ein lineares Upscaling zwischen Labor- und Pilot- bzw. Produktionsmaßstab durch Beibehaltung der Randparameter wie Strahlungsdichte pro cm Leuchtlänge, Ringspaltdicke/optische Weglänge, Durchmesser, Thermik, tangentiale Anströmung, etc.

Der Photo-Röhrenreaktor kann wahlweise vertikal oder horizontal betrieben und auch in einer nichtstationären Ausführung genutzt werden. Mittels der kontinuierlichen und über die Länge des Reaktors verteilten Gaseinleitung kann die gewünschte Sättigung/Übersättigung erzielt werden, wobei die Gaseinleitung zusätzlich zur Turbulenzerzeugung in der Reaktionsstrecke durch die Tangentialeinleitung genutzt werden kann.

### BEZUGSZEICHENLISTE

| | |
|---|---|
| 1 | Modularer Photo-Röhrenreaktor |
| 1',1" | Kopf- und Fußstück |
| 2 | Strahlungsquelle |
| 3 | Hüllrohr |
| 4 | Reaktorsegment |
| 5 | Ringspalt |
| 6 | Fluideinlass |
| 7 | Fluidauslass |
| 8 | Zwischenflansch |
| 9 | Gaskanal |
| 10 | Bohrung |
| 11 | Haltestangen |
| 12 | Haltering |
| 13 | Halterung |
| 14 | Mutter |
| 15 | Gaseinleitungsrohr |
| 16 | Haltering |
| 17 | Durchtrittsvorrichtung |
| 18 | Anschlussstück |
| 19, 19', 19" | Gaseinleitungsrohr/Halterohr mit Gaskanal und Öffnungen |
| 20 | Anschlusskabel |
| 100 | Grundeinheit, einmodularer Reaktor |

## Patentansprüche

1. Modularer Photo-Röhrenreaktor (1) zur photochemischen Behandlung fluider Medien, der eine zentral-axiale Bestrahlungseinheit, die zumindest eine Strahlungsquelle (2) enthält, umfasst, wobei die Bestrahlungseinheit von einer Reaktorwand koaxial umgeben ist und zwischen der Reaktorwand und der Bestrahlungseinheit einen Ringspalt (5), der ein Bestrahlungsvolumen bereitstellt, aufweist, wobei der Ringspalt (5) an einem Kopfstück (1') des Röhrenreaktors (1) mit einem Fluideinlass (6) und an einem Fußstück (1") des Röhrenreaktors (1) mit einem Fluidauslass (7) verbunden ist,
**dadurch gekennzeichnet, dass**
die Reaktorwand durch zwei oder mehr zylindrische Reaktorsegmente (4) bereitgestellt wird, und dass jeweils zwischen zwei benachbarten Reaktorsegmenten (4) ein ringscheibenförmiger Zwischenflansch (8) angeordnet ist,
wobei ein Innendurchmesser der Ringscheibe (8) gleich groß ist wie ein Innendurchmesser der Reaktorsegmente (4), und wobei in einer Scheibenebene des Zwischenflansches (8) eine Mehrzahl an Gaskanälen (9) bereitgestellt ist.

2. Photo-Röhrenreaktor (1) nach Anspruch 1,
**dadurch gekennzeichnet, dass**
die in der Scheibenebene des Zwischenflansches (8) bereitgestellten Gaskanäle (9) sich von einem Zwischenflansch-Außenumfang in Richtung eines Zwischenflansch-Innenumfangs erstrecken und tangential in diesen münden.

3. Photo-Röhrenreaktor (1) nach Anspruch 1 oder 2,
**dadurch gekennzeichnet, dass**
der Fluideinlass (6) durch einen in dem Kopfstück (1') vorliegenden tangential in den Ringspalt (5) mündenden Fluidkanal und/oder der Fluidauslass (7) durch einen in dem Fußstück (1 ") vorliegenden tangential in den Ringspalt (5) mündenden Fluidkanal bereitgestellt ist.

4. Photo-Röhrenreaktor (1) nach zumindest einem der Ansprüche 1 bis 3,
**dadurch gekennzeichnet, dass**
die Bestrahlungseinheit (2) zumindest ein Hüllrohr (3) umfasst, das die Strahlungsquelle (2) umgibt, wobei das Hüllrohr (3) aus einem Material besteht, das für die Strahlung zumindest in einem Wellenlängenbereich, der für die photochemische Behandlung vorgesehen ist, transparent ist, wobei das Material insbesondere ein synthetischer Quarz, ein natürlicher Quarz, ein Borsilikatglas und/oder ein anderes geeignetes Glasmaterial ist.

5. Photo-Röhrenreaktor (1) nach zumindest einem der Ansprüche 1 bis 4,
**dadurch gekennzeichnet, dass**
die Strahlungsquelle eine UV-Strahlungsquelle ist und insbesondere aus der Gruppe ausgewählt ist, die eine Quecksilberniederdrucklampe, eine Quecksilbermitteldrucklampe, eine Quecksilberhochdrucklampe, eine Natriumniederdrucklampe, eine Natriummitteldrucklampe, eine Natriumhochdrucklampe, eine Xenon-Lampe, eine dielektrisch gehinderte Entladungsstrahlungslampe, insbesondere eine Excimer-Lampe und einen LED-Array umfasst.

6. Photo-Röhrenreaktor (1) nach zumindest einem der Ansprüche 1 bis 5,
**dadurch gekennzeichnet, dass**
die Zwischenflansche (8) und das Kopfstück (1') und das Fußstück (1") Bohrungen (10) aufweisen, die parallel zu der Zentralachse der Bestrahlungseinheit außerhalb der Reaktorwand verlaufen,
wobei das Kopfstück (1') und ein Zwischenflansch (8), das Fußstück (1") und ein Zwischenflansch (8) sowie zueinander benachbarte Zwischenflansche (8) Befestigungspaare bilden, deren Bohrungen in einer Montageanordnung des Photoreaktors kongruent zueinander zu liegen kommen und durch Haltestangen (11) miteinander verbindbar sind.

7. Photo-Röhrenreaktor (1) nach Anspruch 6,
**dadurch gekennzeichnet, dass**
das Kopfstück (1') und/oder das Fußstück (1 ") zumindest zweiteilig ist und ein Tangentialanschlussstück und einen Haltering (12), der die Bohrungen aufweist, umfasst, wobei der Haltering (12) zwischen dem Tangentialanschlussstück und einem Reaktorsegment (4) anordenbar ist.

8. Photo-Röhrenreaktor (1) nach zumindest einem der Ansprüche 1 bis 7,
**dadurch gekennzeichnet, dass**
in dem Ringspalt (5) eine Leitspirale angeordnet ist, die sich zumindest teilweise entlang der Länge des Ringspalts (5) erstreckt.

9. Photo-Röhrenreaktor (1) nach Anspruch 8,
**dadurch gekennzeichnet, dass**
die Leitspirale durch zumindest ein Gaseinleitungsrohr (19) in dem Ringspalt (5) fixiert ist.

10. Photo-Röhrenreaktor (1) nach zumindest einem der Ansprüche 1 bis 9,
**dadurch gekennzeichnet, dass**
der Photo-Röhrenreaktor (1) an einer Halterung (13) horizontal oder vertikal anordenbar ist.

11. Photo-Röhrenreaktor (1) nach zumindest einem der Ansprüche 1 bis 10,
**dadurch gekennzeichnet, dass**
die Gaskanäle (9) des Zwischenflansches (8) und/oder zumindest ein zusätzlicher, sich tangential in den Ringspalt (5) erstreckender Einlass an dem Kopfstück (1') und/oder das Gaseinleitungsrohr (19) mit feinsten Düsen ausgestattet sind.

12. Photo-Röhrenreaktor (1) nach zumindest einem der Ansprüche 1 bis 11,
**dadurch gekennzeichnet, dass**
sich durch die Gaskanäle (9) des Zwischenflansches (8) und/oder durch zumindest einen zusätzlichen, sich tangential in den Ringspalt (5) erstreckenden Einlass an dem Kopfstück (1') Röhren und/oder Schläuche in den Ringspalt (5) erstrecken, die mit feinsten Düsen ausgestattet sind.

13. Photo-Röhrenreaktor (1) nach zumindest einem der Ansprüche 1 bis 12,
**dadurch gekennzeichnet, dass**
an dem Fluideinlass (6) eine Einrichtung zur Einleitung von Gas und/oder Reagenzien angeordnet ist, wobei die Einleitungseinrichtung ausgelegt ist, eine effiziente Gassättigung oder Reagenzienverteilung zu erreichen, insbesondere Gasblasen von kleinstmöglichem Durchmesser in dem zu bestrahlenden Fluid zu erzeugen.

## Claims

1. A modular photo-tubular reactor (1) for photochemically treating fluidic media, which comprises a central-axial irradiation unit comprising at least one radiation source (2), wherein the irradiation unit is coaxially surrounded by a reactor wall and encompasses an annular gap (5), which provides for an irradiation volume between the reactor wall and the irradiation unit, wherein the annular gap (5) is connected to a fluid inlet (6) at a head piece (1') of the tubular reactor (1) and is connected to a fluid outlet (7) at a foot piece (1") of the tubular reactor (1),
**characterized in that**
the reactor wall is provided by means of two or a plurality of cylindrical reactor segments (4) and that an annular disk-shaped intermediate flange (8) is in each case arranged between two adjacent reactor segments (4),
wherein an inner diameter of the annular disk (8) has the same size as an inner diameter of the reactor segments (4) , and wherein a plurality of gas ducts (9) is provided in a disk plane of the intermediate flange (8).

2. The photo-tubular reactor (1) according to claim 1,
**characterized in that**
the gas ducts (9) provided in the disk plane of the intermediate flange (8) extend from an intermediate flange outer periphery in the direction of an intermediate flange inner periphery and lead tangentially into it.

3. The photo-tubular reactor (1) according to claim 1 or 2,
**characterized in that**
the fluid inlet (6) is provided by means of a fluid duct, which is present in the head piece (1') and which leads tangentially into the annular gap (5), and/or the fluid outlet (7) is provided by means of a fluid duct, which is present in the foot piece (1") and which leads tangentially into the annular gap (5).

4. The photo-tubular reactor (1) according to at least one of claims 1 to 3,
**characterized in that**
the irradiation unit (2) comprises at least one cladding tube (3), which surrounds the radiation source (2), wherein the cladding tube (3) consists of a material, which is transparent for the radiation at least in a wavelength range, which is provided for the photochemical treatment, wherein the material is in particular a synthetic quartz, a natural quartz, a borosilicate glass and/or another suitable glass material.

5. The photo-tubular reactor (1) according to at least any one of claims 1 to 4,
**characterized in that**
the radiation source is a UV-radiation source and is chosen in particular from the group comprising a mercury low-pressure lamp, a mercury medium-pressure lamp, a mercury high-pressure lamp, a sodium low-pressure lamp, a sodium medium-pressure lamp, a sodium high-pressure lamp, a xenon lamp, a dielectrically hindered discharge radiation lamp, in particular an excimer lamp and an LED array.

6. The photo-tubular reactor (1) according to at least one of claims 1 to 5,
**characterized in that**
the intermediate flanges (8) and the head piece (1') and the foot piece (1") encompass boreholes (10), which run parallel to the central axis of the irradiation unit outside of the reactor wall, wherein the head piece (1') and an intermediate flange (8), the foot piece (1") and an intermediate flange (8) as well as intermediate flanges (8), which are adjacent to one another, form fastening pairs, the boreholes of which come to rest congruent to one another in an assembly arrangement of the photoreactor and can be connected to one another by means of holding rods (11).

7. The photo-tubular reactor (1) according to claim 6,
**characterized in that**
the head piece (1') and/or the foot piece (1") has an at least two-part construction and encompasses a tangential connecting piece and a holding ring (12), which encompasses the boreholes, wherein the holding ring (12) can be arranged between the tangential connecting piece and a reactor segment (4).

8. The photo-tubular reactor (1) according to at least any one of claims 1 to 7,
**characterized in that**
a guide coil, which extends at least partially along the length of the annular gap (5), is arranged in the annular gap (5).

9. The photo-tubular reactor (1) according to claim 8,
**characterized in that**
the guide coil is fixed in the annular gap (5) by means of at least one gas introduction tube (19).

10. The photo-tubular reactor (1) according to at least one of claims 1 to 9,
**characterized in that**
the photo-tubular reactor (1) can be arranged horizontally or vertically on a holder (13).

11. The photo-tubular reactor (1) according to at least one of claims 1 to 10,
**characterized in that**
the gas ducts (9) of the intermediate flange (8) and/or at least one additional inlet on the head piece (1'), which extends tangentially into the annular gap (5), and/or the gas introduction tube (19), are equipped with the finest nozzles.

12. The photo-tubular reactor (1) according to at least one of claims 1 to 11,
**characterized in that**
tubes and/or hoses, which are equipped with finest nozzles, extend into the annular gap (5) through the gas ducts (9) of the intermediate flange (8) and/or through at least one additional inlet on the head piece (1'), which extends tangentially into the annular gap (5).

13. The photo-tubular reactor (1) according to at least one of claims 1 to 12,
**characterized in that**
a device for introducing gas and/or reagents is arranged on the fluid inlet (6), wherein the introduction direction is designed to obtain an efficient gas saturation or reagent distribution, in particular to create gas bubbles having the smallest possible diameter in the fluid, which is to be irradiated.

## Revendications

1. Réacteur tubulaire photo modulaire (1) pour le traitement photochimique de milieux fluides qui comprend un module d'irradiation axial centralement qui contient au moins une source de rayonnement (2), dans lequel le module d'irradiation est entouré de manière coaxiale d'une paroi de réacteur et présente entre la paroi de réacteur et le module d'irradiation un passage annulaire (5) qui fournit un volume d'irradiation, dans lequel l'espace annulaire (5) est relié au niveau d'une pièce de tête (1') du réacteur tubulaire (1) à une entrée fluidique (6) et au niveau d'une pièce de pied (1") du réacteur tubulaire (1) à une sortie fluidique (7),
**caractérisé en ce que**
la paroi de réacteur est fournie par deux segments de réacteur cylindriques (4) ou plus et qu'une bride intermédiaire en forme de disque annulaire (8) est disposée à chaque fois entre deux segments de réacteur voisins (4),
dans lequel un diamètre interne du disque annulaire (8) est égal à un diamètre interne des segments de réacteur (4), et dans lequel une pluralité de canaux de gaz (9) est fournie dans un plan de disque de la bride intermédiaire (8).

2. Réacteur tubulaire photo (1) selon la revendication 1,
**caractérisé en ce que**
les canaux de gaz (9) fournis dans le plan de disque de la bride intermédiaire (8) s'étendent d'une périphérie externe de bride intermédiaire en direction d'une périphérie interne de bride intermédiaire et débouchent de manière tangentielle dans celle-ci.

3. Réacteur tubulaire photo (1) selon la revendication 1 on 2,
**caractérisé en ce que**
l'entrée fluidique (6) est fournie par un canal fluidique présent dans la pièce de tête (1'), débouchant de manière tangentielle dans l'espace annulaire (5) et/ou la sortie fluidique (7) est fournie par un canal fluidique présent dans la pièce de pied (1"), débouchant de manière tangentielle dans l'espace annulaire (5).

4. Réacteur tubulaire photo (1) selon au moins une des revendications 1 à 3,
**caractérisé en ce que**
le module d'irradiation (2) comprend au moins un tube d'enveloppe (3) qui entoure la source de rayonnement (2), dans lequel le tube d'enveloppe (3) se compose d'un matériau qui est transparent pour le rayonnement au moins dans une plage de longueurs d'onde qui est prévue pour le traitement photochimique, dans lequel le matériau est notamment un quartz synthétique, un quartz naturel, un verre de silicate de bore et/ou un autre matériau de verre approprié.

5. Réacteur tubulaire photo (1) selon au moins une des revendications 1 à 4,
**caractérisé en ce que**
la source de rayonnement est une source de rayonnement UV et est notamment sélectionnée parmi le groupe qui comprend une lampe à mercure à basse pression, une lampe à mercure à moyenne pression, une lampe à mercure à haute pression, une lampe à sodium à basse pression, une lampe à sodium à moyenne pression, une lampe à sodium à haute pression, une lampe à xénon, une lampe de rayonnement à décharge bloquée de manière diélectrique, notamment une lampe excimère et un réseau de LED.

6. Réacteur tubulaire photo (1) selon au moins une des revendications 1 à 5,
**caractérisé en ce que**
la bride intermédiaire (8) et la pièce de tête (1') et la pièce de pied (1") présentent des alésages (10) qui s'étendent parallèlement à l'axe central du module d'irradiation en dehors de la paroi de réacteur,
dans lequel la pièce de tête (1') et une bride intermédiaire (8), la pièce de pied (1") et une bride intermédiaire (8) ainsi que des brides intermédiaires voisines (8) forment des paires de fixation dont les alésages viennent en appui de manière congruente les uns vers les autres dans un agencement de montage du réacteur photo et peuvent être reliés ensemble par des tiges de maintien (11) .

7. Réacteur tubulaire photo (1) selon la revendication 6,
**caractérisé en ce que**
la pièce de tête (1') et/ou la pièce de pied (1") est au moins en deux parties et comprend une pièce de raccord tangentiel et un anneau de maintien (12) qui présente les alésages, dans lequel l'anneau de maintien (12) peut être disposé entre la pièce de raccord tangentiel et un segment de réacteur (4).

8. Réacteur tubulaire photo (1) selon au moins une des revendications 1 à 7,
**caractérisé en ce que**
une spirale conductrice qui s'étend au moins en partie le long de la longueur de l'espace annulaire (5) est disposée dans l'espace annulaire (5).

9. Réacteur tubulaire photo (1) selon la revendication 8,
**caractérisé en ce que**
la spirale conductrice est fixée par au moins un tube d'introduction de gaz (19) dans l'espace annulaire (5).

10. Réacteur tubulaire photo (1) selon au moins une des revendications 1 à 9,
**caractérisé en ce que**
le réacteur tubulaire photo (1) peut être disposé horizontalement ou verticalement sur une fixation (13).

11. Réacteur tubulaire photo (1) selon au moins une des revendications 1 à 10,
**caractérisé en ce que**
les canaux de gaz (9) de la bride intermédiaire (8) et/ou au moins une entrée supplémentaire s'étendant de manière tangentielle dans l'espace annulaire (5) sur la pièce de tête (1') et/ou le tube d'introduction de gaz (19) sont équipés de buses les plus fines.

12. Réacteur tubulaire photo (1) selon au moins une des revendications 1 à 11,
**caractérisé en ce que**
des tubes et/ou tuyaux qui sont équipés de buses les plus fines s'étendent dans l'espace annulaire (5) à travers les canaux de gaz (9) de la bride intermédiaire (8) et/ou à travers au moins une entrée supplémentaire s'étendant de manière tangentielle dans l'espace annulaire (5) sur la pièce de tête (1'),

13. Réacteur tubulaire photo (1) selon au moins une des revendications 1 à 12,
**caractérisé en ce que**
un dispositif pour l'introduction de gaz et/ou de réactifs est disposé au niveau de l'entrée fluidique (6), dans lequel le dispositif d'introduction est conçu pour obtenir une saturation gazeuse ou distribution des réactifs efficace, notamment pour générer des bulles de gaz du diamètre le plus petit possible dans le fluide à irradier.
